# EUROPÄISCHE PATENTSCHRIFT

(11) **EP 3 281 983 B1**
(45) Veröffentlichungstag und Bekanntmachung des Hinweises auf die Patenterteilung: **15.06.2022**
(21) Anmeldenummer: 16184006.1
(22) Anmeldetag: 12.08.2016
(51) Int. Cl.: C08L 77/06

(54) **ZÄHE POLYAMIDFORMMASSE**
TOUGHENED POLYAMIDE MOULDING MATERIAL
MASSE DE FORMAGE POLYAMIDE DURE

(43) Veröffentlichungstag der Anmeldung: 14.02.2018
(73) Patentinhaber: Evonik Operations GmbH, 45128 Essen (DE)
(72) Erfinder: PEIRICK, Heinrich, 48653 Coesfeld (DE); BERGER, Jasmin, 44141 Dortmund (DE); BAUMANN, Franz-Erich, 48249 Dülmen (DE)
(74) Vertreter: Evonik Patent Association

(56) Entgegenhaltungen:
- EP-A1- 1 847 569
- EP-A1- 2 778 190

## Beschreibung

Gegenstand der Erfindung ist eine Formmasse, die ein transparentes Polyamid und einen speziellen Kern-Schale-Modifier enthält. Entsprechende Formmassen sind transparent und weisen gegenüber dem Basispolymer verbesserte mechanische Eigenschaften auf.

Transparente Polyamide aus Bis-(4-aminocyclohexyl)-methan (PACM) mit einem Gehalt an trans,trans-Stereoisomer von 30 bis 70 % sowie Dodecandisäure sind aus der DE 15 95 150 A1 bekannt. Entsprechende transparente Polyamide aus 35 bis 60 Mol-% trans,trans-Bis-(4-aminocyclohexyl)-methan und 65 bis 40 Mol-% anderen Diaminen sowie linearen aliphatischen Dicarbonsäuren werden in der EP 0 619 336 A2 beschrieben.

Die Polyamide auf Basis von PACM haben wertvolle anwendungstechnische Eigenschaften, beispielsweise sind sie bei geeigneter Zusammensetzung transparent, aber mikrokristallin und damit lösemittel- und spannungsrissbeständig; ihre mechanischen Eigenschaften, etwa die Schlagzähigkeit, sind auf hohem Niveau. Allerdings ist die Schlagzähigkeit, die Kerbempfindlichkeit und die Durchstoßfestigkeit noch verbesserungswürdig. Dies ist beispielsweise im Anwendungsgebiet Brillengestelle oder Rahmen von Bedeutung, insbesondere bei "Sport"- und "Defense"-Applikationen.

Die Aufgabe der Erfindung besteht darin, die Bruchfestigkeit und die Kerbschlagzähigkeit entsprechender Formteile zu verbessern, ohne die Lösemittel- und Spannungsrissbeständigkeit zu verschlechtern. Des weiteren soll die Transparenz der Formmassen nicht signifikant gesenkt werden. Üblicherweise werden die genannten Anforderungen durch Zähmodifizierung des Basispolymeren erreicht. Problematisch ist jedoch die Zähmodifizierung von transparenten Polymeren, da diese Formmassen durch das Mischen mit dem Zähmodifier eintrüben.

In der US2015/0099847A1 werden transparente Polyamidblends auf der Basis von PA PACM12 und einem PA 12 beschrieben, welche gute Transmissionen erreichen, in der Kerbschlagzähigkeit jedoch nur mäßig sind.

Die US2014/275392A1 beschreibt Polyamidformmassen auf Basis von PACM oder Bis-(3-methyl-4-aminocyclohexyl)-methan (MACM) sowie Decandicarbonsäure, Dodecandicarbonsäure oder Tetradecandicarbonsäure, die zusätzlich ein funktionalisiertes Styrol-Ethylen/Butylen-Styrol-Blockcopolymer als Schlagzähmodifier enthalten. Im Vergleichsbeispiel 14 wird eine Formmasse aus PA MACM12 und einem Kern-Schale-Polymer mit Butadien-Styrol-Copolymer als Kern und Polymethylmethacrylat als Schale hergestellt. Diese Formmasse weist eine verschlechterte Lichttransmission von nur 76,1 % auf, während mit funktionalisiertem Styrol-Ethylen/Butylen-Styrol-Blockcopolymer als Schlagzähmodifier eine Lichttransmission im Bereich von 85 bis 92 % erreicht wird.

Überraschenderweise wurde nun festgestellt, dass dieser für PA MACM12 belegte Effekt bei entsprechenden Formmassen mit Polyamiden auf Basis von PACM nicht vorliegt und dass mit geeigneten Kern-Schale-Modifiern hier Lichttransmissionen erzielt werden, die -je nach Dicke und Wellenlänge - nur um ca. 2 bis 5 % unter den Werten des reinen Polyamids liegen, wobei die Zähigkeit und die Bruchdehnung sich auf einem hohen Niveau befinden.

Demzufolge wurde die Aufgabe durch eine Formmasse gelöst, die zu mindestens 50 Gew.-%, vorzugsweise zu mindestens 60 Gew.-%, besonders bevorzugt zu mindestens 70 Gew.-%, insbesondere bevorzugt zu mindestens 80 Gew.-% und ganz besonders bevorzugt zu mindestens 90 Gew.-% aus der Kombination folgender Bestandteile besteht:
a) 80 bis 97 Masseteile, vorzugsweise 82 bis 95 Masseteile und besonders bevorzugt 85 bis 92 Masseteile einer Polyamidkomponente, enthaltend
   a1) 70 bis 100 Gew.-Teile, vorzugsweise 75 bis 99 Gew.-Teile, besonders bevorzugt 80 bis 98 Gew.-Teile und insbesondere bevorzugt 85 bis 97 Gew.-Teile PA PACMX (mit X = 8 bis 18) sowie
   a2) 30 bis 0 Gew.-Teile, vorzugsweise 25 bis 1 Gew.-Teile, besonders bevorzugt 20 bis 2 Gew.-Teile und insbesondere bevorzugt 15 bis 3 Gew.-Teile eines linearen aliphatischen Polyamids mit im Mittel 8 bis 12 C-Atomen in den Monomereinheiten,
   wobei die Summe der Gew.-Teile 100 ergibt, sowie
b) 20 bis 3 Masseteile, vorzugsweise 18 bis 5 Masseteile und besonders bevorzugt 15 bis 8 Masseteile eines Kern-Schale-Modifiers, der aus Partikeln mit einem gewichtsmittleren Durchmesser von 20 bis 500 nm besteht, der Folgendes enthält:
   b1) Einen Kern, der 60 bis 100 Gew.-% und vorzugsweise 70 bis 100 Gew.-% Einheiten von Butadien sowie 0 bis 40 Gew.-% und vorzugsweise 0 bis 30 Gew.-% Einheiten von Styrol enthält, wobei die Prozentangaben auf den Kern bezogen sind, und wobei der Kern 60 bis 95 Gew.-%, vorzugsweise 70 bis 94 Gew.-% und besonders bevorzugt 75 bis 93 Gew.-% des Kern-Schale-Modifiers ausmacht, sowie
   b2) eine Schale, die 80 bis 100 Gew.-% und vorzugsweise 90 bis 100 Gew.-% Einheiten von Methylmethacrylat und 0 bis 20 Gew.-% und vorzugsweise 0 bis 10 Gew.-% Einheiten von modifizierenden Monomeren enthält, jeweils bezogen auf die Schale, und wobei die Schale 40 bis 5 Gew.-%, vorzugsweise 30 bis 6 Gew.-% und besonders bevorzugt 25 bis 7 Gew.-% des Kern-Schale-Modifiers ausmacht,
   wobei die Summe der Masseteile 100 ergibt,
   wobei die Differenz der Brechungsindizes zwischen der Polyamidkomponente gemäß a) und dem Kern-Schale-Modifier gemäß b) bei 20 °C kleiner als 0,008 ist, gemessen gemäß DIN EN ISO 489:1999 nach Methode A.

In einer bevorzugten Ausführungsform besteht die Polyamidkomponente gemäß a) nur aus dem Polyamid a1), während a2) nicht enthalten ist.

In einer weiteren bevorzugten Ausführungsform enthält der Kern b1) keine Einheiten von Styrol.

Die hier verwendete Nomenklatur der Polyamide entspricht der EN ISO 1874-1. Demnach bezeichnet PA PACMX ein Polyamid aus Monomereinheiten, die sich von Bis-(4-aminocyclohexyl)-methan (PACM) und einer linearen Dicarbonsäure mit X C-Atomen herleiten. Dies können erfindungsgemäß folgende Dicarbonsäuren sein:
X = 8: Octandisäure (Korksäure)
X = 9: Nonandisäure (Azelainsäure)
X = 10: Decandisäure (Sebacinsäure)
X = 11: Undecandisäure
X = 12: Dodecandisäure
X = 13: Tridecandisäure (Brassylsäure)
X = 14: Tetradecandisäure
X = 15: Pentadecandisäure
X = 16: Hexadecandisäure
X = 17: Heptadecandisäure
X = 18: Octadecandisäure

In einer bevorzugten Ausführungsform ist X geradzahlig; in einer weiteren bevorzugten Ausführungsform beträgt X 10 bis 14 und besonders bevorzugt 12.

Üblicherweise wird das PA PACMX aus PACM sowie der Dicarbonsäure durch Polykondensation in der Schmelze nach bekannten Verfahren hergestellt. Man kann jedoch auch Derivate hiervon einsetzen, beispielsweise das Diisocyanat, das sich von PACM herleitet, oder einen Dicarbonsäurediester.

PACM liegt als Gemisch aus cis,cis-, cis,trans- und trans,trans-Isomeren vor. Es ist mit unterschiedlichen Isomerenverhältnissen kommerziell erhältlich. In einer bevorzugten Ausführungsform beträgt der Gehalt des PACM bzw. des eingesetzten Derivates hiervon an trans,trans-Isomer 30 bis 70 % und besonders bevorzugt 35 bis 65 %.

In einer weiteren bevorzugten Ausführungsform ist das PA PACMX mikrokristallin mit einer Schmelzenthalpie, gemessen gemäß ISO 11357 beim 2. Aufheizen und einer Aufheiz- und Abkühlrate von 20 °C/min, von 5 bis 40 J/g und besonders bevorzugt von 8 bis 35 J/g.

Weiterhin ist bevorzugt, dass das PA PACMX transparent ist mit einer Transmission von mindestens 85 % und besonders bevorzugt von mindestens 90 % und mit einem Haze von kleiner als 3 % und besonders bevorzugt von kleiner als 2 %, beides an spritzgegossenen Prüfkörpern mit einer Dicke von 2 mm gemäß ASTM D1003 bestimmt.

Besonders bevorzugt ist das PA PACMX ein PA PACM12, bei dem der Gehalt des PACM bzw. des eingesetzten Derivates hiervon an trans,trans-Isomer 30 bis 70 % und insbesonders bevorzugt 35 bis 65 % beträgt und das mikrokristallin ist mit einer Schmelzenthalpie, gemessen gemäß ISO 11357 beim 2. Aufheizen und einer Aufheiz- und Abkühlrate von 20 °C/min, von 5 bis 40 J/g und besonders bevorzugt von 8 bis 35 J/g.

Das lineare aliphatische Polyamid gemäß a2) besitzt im Mittel der einzelnen Monomereinheiten 8 bis 12 C-Atome. Es ist herstellbar aus einer Kombination von Diamin und Dicarbonsäure, aus einer ω-Aminocarbonsäure und/oder dem entsprechenden Lactam. Die fraglichen Monomereinheiten sind somit die Einheiten, die sich von Lactam, ω-Aminocarbonsäure, Diamin bzw. Dicarbonsäure herleiten. Beispielsweise sind folgende Polyamide geeignet:

| | |
|---|---|
| - Mittel 8 C-Atome: | PA88, PA79, PA97, PA610, PA106 |
| - Mittel 8,5 C-Atome: | PA 89, PA98, PA611, PA116, PA512 |
| - Mittel 9 C-Atome: | PA99, PA810, PA108, PA612, PA126 |
| - Mittel 9,5 C-Atome: | PA910, PA109, PA811, PA118, PA613, PA136, PA514 |
| - Mittel 10 C-Atome: | PA10, PA1010, PA812, PA128, PA614, PA146 |
| - Mittel 10,5 C-Atome: | PA1011, PA813, PA138, PA516 |
| - Mittel 11 C-Atome: | PA11, PA1012, PA1210, PA913, PA139, PA814, PA148, PA616 |
| - Mittel 11,5 C-Atome: | PA1112, PA1211, PA1013, PA1310, PA914, PA149, PA815, PA617, PA518 |
| - Mittel 12 C-Atome: | PA12, PA1212, PA1113, PA1014, PA1410, PA816, PA618 |

Als Polyamid geeignet sind auch Copolyamide, die anhand geeigneter Comonomerenauswahl die Bedingung erfüllen, dass die Monomereinheiten im Mittel 8 bis 12 C-Atome enthalten, beispielsweise das Copolyamid aus Laurinlactam, Decandiamin und Dodecandisäure (co-PA12/1012). Selbstverständlich können als Komponente gemäß a2) auch Mischungen entsprechender Polyamide eingesetzt werden, wobei eine ausreichende Verträglichkeit miteinander vorteilhaft ist.

In einer bevorzugten Ausführungsform ist das lineare aliphatische Polyamid gemäß a2) teilkristallin mit einer Schmelzenthalpie, gemessen gemäß ISO 11357 beim 2. Aufheizen und einer Aufheiz-und Abkühlrate von 20 °C/min, von mindestens 20 J/g, besonders bevorzugt von mindestens 25 J/g und insbesondere bevorzugt von mindestens 30 J/g.

Das lineare aliphatische Polyamid gemäß a2) besitzt vorzugsweise eine relative Lösungsviskosität ηᵣₑₗ von 1,3 bis 2,4, besonders bevorzugt von 1,4 bis 2,2 und insbesondere bevorzugt von 1,5 bis 2,1. ηᵣₑₗ wird hierbei in einer 0,5 gew.-%igen Lösung in m-Kresol bei 23 °C gemäß ISO 307 bestimmt. Wenn eine besonders gute Fließfähigkeit der Schmelze erzielt werden soll, wird vorteilhafterweise ein lineares aliphatisches Polyamid mit einer niedrigen relativen Lösungsviskosität ηᵣₑₗ eingesetzt, beispielsweise im Bereich von 1,3 bis 1,9, vorzugsweise im Bereich von 1,3 bis 1,8 und besonders bevorzugt im Bereich von 1,3 bis 1,7.

Als lineares aliphatisches Polyamid gemäß a2) werden vorzugsweise PA612, PA1010, PA1012, PA11 oder PA12 eingesetzt, besonders bevorzugt PA11 oder PA12.

Der Kern-Schale-Modifier besteht aus Partikeln mit einem gewichtsmittleren Durchmesser von 20 bis 500 nm, vorzugsweise von 30 bis 400 nm, besonders bevorzugt von 40 bis 350 nm und insbesondere bevorzugt von 50 bis 300 nm. Der Kern kann unvernetzt sein; vorzugsweise ist er vernetzt. Die Schale kann unvernetzt oder vernetzt sein. Die Vernetzung kann durch den Zusatz einer Verbindung mit zwei oder mehr Vinylgruppen bei der Herstellung erzielt werden, beispielsweise Divinylbenzol, Ethylenglykoldimethylacrylat, Trimethacrylaten, Triacrylaten, Allylacrylat, Allylmethacrylat, Diallylphthalat oder Triallylisocyanurat. Darüber hinaus können in der Schale weitere Monomere einpolymerisiert sein, die über eine funktionelle Gruppe verfügen, die mit Polyamid reagieren kann, beispielsweise Acrylsäure, Glycidylmethacrylat, Maleinsäureanhydrid oder Itaconsäureanhydrid. Weitere modifizierende Monomere, die in die Schale einpolymerisiert sein können, sind beispielsweise Styrol, Acrylnitril, Acrylamid oder Hydroxyethylmethacrylat.

Neben dem Kern und der Schale kann der Kern-Schale-Modifier noch eine oder mehrere Zwischenschalen enthalten, wenn dies für das Erzielen bestimmter Eigenschaften vorteilhaft ist.

Die Herstellung derartiger Kern-Schale-Modifier ist beispielsweise in der EP0722961A1 oder der US2009/0149600 beschrieben. Geeignete Typen sind kommerziell verfügbar.

Um die Transparenz der Formmasse möglichst wenig zu beeinträchtigen, wird der Kern-Schale-Modifier so gewählt, dass die Differenz der Brechungsindizes zwischen der Polyamidkomponente und dem Kern-Schale-Modifier bei 20 °C kleiner als 0,008, bevorzugt kleiner als 0,005 und besonders bevorzugt kleiner als 0,003 ist. Die Brechungsindices werden hierbei gemäß DIN EN ISO 489:1999 nach Methode A (Gerät Zeiss Abbe Modell A, Lampe Schott KL 150 B, weiße Kaltlichtquelle) bestimmt.

Vorzugsweise ist die erfindungsgemäße Formmasse transparent mit einer Transmission von mindestens 85 % und besonders bevorzugt von mindestens 88 %, gemessen an spritzgegossenen Prüfkörpern mit einer Dicke von 2 mm gemäß ASTM D1003.

Die erfindungsgemäße Formmasse kann neben den Komponenten gemäß a) und b) weitere übliche Zusatzstoffe als Bestandteile enthalten, die vorzugsweise so gewählt werden, dass sie die Transparenz nicht oder nur möglichst wenig beeinträchtigen, beispielsweise Flammschutzmittel, Stabilisatoren, Weichmacher, Glasfasern, Füllstoffe, Nanopartikel, Antistatika, Farbstoffe, Pigmente, Entformungsmittel oder Fließmittel. Die Menge dieser weiteren Bestandteile beträgt insgesamt maximal 50 Gew.-%, bevorzugt maximal 40 Gew.-%, besonders bevorzugt maximal 30 Gew.-%, insbesondere bevorzugt maximal 20 Gew.-% und ganz besonders bevorzugt maximal 10 Gew.-% bzw. maximal 5 Gew.-%, bezogen auf die gesamte Formmasse.

Die Formmasse kann durch Schmelzemischen auf geeigneten Knetern beziehungsweise Compoundiermaschinen, Austragen und Zerkleinern hergestellt werden. Es handelt sich hierbei um ein mehrphasiges System, bei dem der Modifier in der Polyamidmatrix feindispers verteilt vorliegt. Das Schmelzemischen erfolgt gemäß dem Stand der Technik in einem knetenden Aggregat, das Austragen in der Regel als Strang und das Zerkleinern in der Regel mittels Granulieren, Schroten oder Mahlen. Die Formmasse kann durch Aufschmelzen und Formgeben mittels dem Fachmann bekannter Verfahren wie Spritzgießen, Extrudieren, Pressen oder Walzen zu einem geformten Gegenstand verarbeitet werden.

Gegenstand der Erfindung sind auch die aus der anspruchsgemäßen Mischung hergestellten geformten Gegenstände. Dies sind beispielsweise Formteile, Folien, Borsten oder Fasern.

Die erfindungsgemäßen geformten Gegenstände zeichnen sich insbesondere durch die Kombination von hoher Transparenz, hoher Zähigkeit und hoher Chemikalien-, Lösemittel- und Spannungsrissbeständigkeit aus. Mögliche Anwendungsgebiete sind beispielsweise Brillengestelle oder Rahmen, daneben auch Bauteile, bei denen eine hohe mechanische Belastbarkeit gefordert ist. Durch die Verwendung der erfindungsgemäßen Mischung kann hier die Lebensdauer erhöht werden. Darüber hinaus ermöglicht die Erfindung, qualitativ hochwertigere Folien herzustellen, beispielsweise für Oberbeläge von Sportartikeln wie z. B. Skiern oder Snowboards. Dies zeigt sich beispielweise in einer geringeren Stippenanzahl.

Die Erfindung wird im Folgenden beispielhaft erläutert.

In den Beispielen wurden folgende Materialien eingesetzt:
- PA PACM12:: mikrokristallines Polyamid, hergestellt aus Bis-(4-aminocyclohexyl)-methan mit einem Gehalt an trans,trans-Stereoisomer von 48 % sowie Dodecandisäure; µᵣₑₗ = 1,8; Schmelzenthalpie 19 J/g
- Kern-Schale-Modifier:: Paraloid EXL 2690 (Dow Chemical Company; besteht gemäß Analyse zu ca. 80 Gew.-% aus einem Kern, in dem nur Einheiten von Butadien und keine Styroleinheiten nachweisbar sind, und zu ca. 20 Gew.-% aus einer Schale, die im Wesentlichen aus Methylmethacrylateinheiten aufgebaut ist)
- SEBS-Modifier:: Kraton FG1901

Aus PA PACM12 und Modifier wurde eine Schmelzemischung auf einem Kneter hergestellt, ausgetragen, granuliert und in Granulatform auf einer Spritzgießmaschine zu Formteilen verarbeitet (Massetemperatur 280 °C; Formtemperatur 80 °C). Die Ergebnisse sind in der Tabelle 1 wiedergegeben.

Die aus den Schmelzemischungen hergestellten Formteile zeigen - im Vergleich zum verwendeten PA PACM12 - eine kaum verminderte Transparenz und eine sehr gute Kerbschlagzähigkeit.

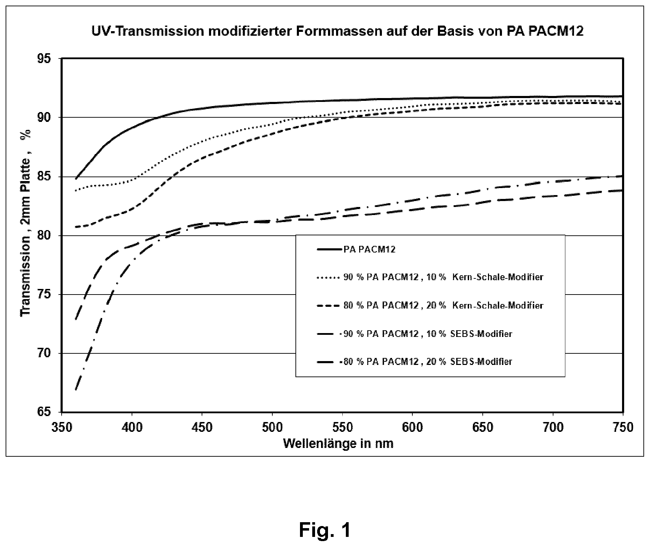

Zur Bestimmung der Transparenz wurden die Formmassen auf einer Spritzgießmaschine zu Formteilen mit den Abmessungen 60 * 60 * 2 mm verarbeitet (Massetemperatur 280 °C; Formtemperatur 80 °C) und die Transmission an den Formteilen gemessen (Gerät: Xrite Modell Ci7, Lichart D65, Beobachterwinkel 10 °). Die Ergebnisse sind in der **Figur 1** wiedergegeben. Während die erfindungsgemäßen Formteile mit dem Kern-Schale-Modifier eine hohe Transparenz aufweisen, zeigen die Formteile mit dem SEBS-Modifier nur eine mäßige Transparenz.

**Tabelle 1: Prüfergebnisse**

| **Prüfung** | | | **PA PACM12 Referenz** | **Beispiel 1** | **Beispiel 2** | **Beispiel 3** |
|---|---|---|---|---|---|---|
| | | | | **95 % PA PACM12 5 % Kern-Schale-Modifier** | **90 % PA PACM12 10 % Kern-Schale-Modifier** | **80 % PA PACM12 20% Kern-Schale-Modifier** |
| Schlagzähigkeit (ISO 179/1eU) | 23 °C | kJ/m² | 10/10 kein Bruch | 10/10 kein Bruch | 10/10 kein Bruch | 10/10 kein Bruch |
| | -30 °C | kJ/m² | 10/10 kein Bruch | 10/10 kein Bruch | 10/10 kein Bruch | 10/10 kein Bruch |
| Kerbschlagzähigkeit (ISO179/1eA) | 23 °C | kJ/m² | 12 | 26 | 57 | 32 |
| | -30 °C | kJ/m² | 11 | - | 25,6 | 25,5 |
| Zugversuch ISO 527 | | | | | | |
| Streckspannung | | N/mm² | 60 | 54,7 | 48,5 | 39,7 |
| Streckdehnung | | % | 8,3 | 8 | 7,7 | 8,2 |
| Reißfestigkeit | | N/mm² | 63 | 57,7 | 54 | 48 |
| Reißdehnung | | % | 200 | 164 | 154 | 147 |
| Zug-E-Modul ISO 527 | | N/mm² | 1450 | 1350 | 1230 | 1030 |
| Farbmessungen L, a, b 2 mm Platte | | CIELAB | 96,4 / -0,06 / 0,28 | 96,42 / -0,09 / 1,03 | 96,14 / -0,11 / 1,74 | 95,88 / -0,17 / 2,36 |
| Transmission bei 550 - 750 nm, 2 mm | | % | 91,5-91,8 | 91,1 -91,6 | 90,5 - 91,3 | 90,0 - 91,1 |

| | | | | | | |
|---|---|---|---|---|---|---|
| Brechungsindex (20 °C) TROGAMID CX7323: 1,516 Brechungsindex (20 °C) Paraloid EXL 2690: 1,514 | | | | | | |

## Patentansprüche

1. Formmasse, die zu mindestens 50 Gew.-% aus der Kombination folgender Bestandteile besteht:
a) 80 bis 97 Masseteile einer Polyamidkomponente, enthaltend
a1) 70 bis 100 Gew.-Teile PA PACMX (mit X = 8 bis 18) sowie
a2) 30 bis 0 Gew.-Teile eines linearen aliphatischen Polyamids mit im Mittel 8 bis 12 C-Atomen in den Monomereinheiten,
wobei die Summe der Gew.-Teile 100 ergibt, sowie
b) 20 bis 3 Masseteilen eines Kern-Schale-Modifiers, der aus Partikeln mit einem gewichtsmittleren Durchmesser von 20 bis 500 nm besteht, der Folgendes enthält:
b1) Einen Kern, der 60 bis 100 Gew.-% Einheiten von Butadien und 0 bis 40 Gew.-% Einheiten von Styrol enthält, wobei der Kern 60 bis 95 Gew.-% des Kern-Schale-Modifiers ausmacht; sowie
b2) eine Schale, die 80 bis 100 Gew.-% Einheiten von Methylmethacrylat und 0 bis 20 Gew.-% Einheiten von modifizierenden Monomeren enthält, wobei die Schale 5 bis 40 Gew.-% des Kern-Schale-Modifiers ausmacht,
wobei die Summe der Masseteile 100 ergibt,
**dadurch gekennzeichnet, dass** die Differenz der Brechungsindizes zwischen der Polyamidkomponente gemäß a) und dem Kern-Schale-Modifier gemäß b) bei 20 °C kleiner als 0,008 ist, gemessen gemäß DIN EN ISO 489:1999 nach Methode A.

2. Formmasse gemäß Anspruch 1, **dadurch gekennzeichnet, dass** das PA PACMX ausgewählt ist aus PA PACM10, PA PACM12 und PA PACM14.

3. Formmasse gemäß Anspruch 1, **dadurch gekennzeichnet, dass** das PA PACMX ein PA PACM12 ist.

4. Formmasse gemäß einem der vorhergehenden Ansprüche, **dadurch gekennzeichnet, dass** das PA PACMX ausgehend von PACM hergestellt wurde, dessen Gehalt an trans,trans-Isomer 30 bis 70 % und bevorzugt 35 bis 65 % beträgt.

5. Formmasse gemäß einem der vorhergehenden Ansprüche, **dadurch gekennzeichnet, dass** das PA PACMX mikrokristallin ist mit einer Schmelzenthalpie, gemessen gemäß ISO 11357 beim 2. Aufheizen und einer Aufheiz- und Abkühlrate von 20 °C/min, von 5 bis 40 J/g und bevorzugt von 8 bis 35 J/g.

6. Formmasse gemäß einem der vorhergehenden Ansprüche, **dadurch gekennzeichnet, dass** das PA PACMX transparent ist mit einer Transmission von mindestens 85 % und einem Haze von kleiner als 3 %, beides an spritzgegossenen Prüfkörpern mit einer Dicke von 2 mm gemäß ASTM D 1003 bestimmt.

7. Formmasse gemäß Anspruch 3, **dadurch gekennzeichnet, dass** das PA PACM12
- ausgehend von einem PACM hergestellt wurde, dessen Gehalt an trans,trans-Isomer 30 bis 70 % und bevorzugt 35 bis 65 % beträgt und
- mikrokristallin ist mit einer Schmelzenthalpie, gemessen gemäß ISO 11357 beim 2. Aufheizen und einer Aufheiz- und Abkühlrate von 20 °C/min, von 5 bis 40 J/g und bevorzugt 8 bis 35 J/g.

8. Formmasse gemäß einem der vorhergehenden Ansprüche, **dadurch gekennzeichnet, dass** sie transparent ist mit einer Transmission von mindestens 85 %, gemessen an spritzgegossenen Prüfkörpern mit einer Dicke von 2 mm gemäß ASTM D1003.

9. Formmasse gemäß einem der vorhergehenden Ansprüche, **dadurch gekennzeichnet, dass** sie aus den Komponenten a) und b) sowie maximal 50 Gew.-% weiteren üblichen Zusatzstoffen besteht.

10. Geformter Gegenstand, hergestellt aus der Formmasse gemäß einem der vorhergehenden Ansprüche.

11. Geformter Gegenstand gemäß Anspruch 10, **dadurch gekennzeichnet, dass** er ein Formteil, eine Folie, eine Borste oder eine Faser ist.

12. Geformter Gegenstand gemäß einem der Ansprüche 10 und 11, **dadurch gekennzeichnet, dass** er ein Brillengestell, ein Rahmen oder der Oberbelag eines Sportartikels ist.

## Claims

1. Moulding material which consists to an extent of at least 50 wt% of the combination of the following constituents:
a)80 to 97 parts by mass of a polyamide component comprising
a1)70 to 100 parts by wt of PA PACMX (where X = 8 to 18) and
a2) 30 to 0 parts by wt of a linear aliphatic polyamide having on average 8 to 12 carbon atoms in the monomer units,
wherein the parts by wt sum to 100, and
b)20 to 3 parts by mass of a core-shell modifier which consists of particles having a weight-average diameter of 20 to 500 nm and comprises the following:
b1)a core which comprises 60 to 100 wt% of butadiene units and 0 to 40 wt% of styrene units, wherein the core makes up 60 to 95 wt% of the core-shell modifier; and
b2)a shell which comprises 80 to 100 wt% of methyl methacrylate units and 0 to 20 wt% of modifying monomer units, wherein the shell makes up 5 to 40 wt% of the core-shell modifier,
wherein the parts by mass sum to 100,
**characterized in that** the difference in the refractive indices between the polyamide component according to a) and the core-shell modifier according to b) at 20°C is less than 0.008 measured according to DIN EN ISO 489:1999 by method A.

2. Moulding material according to Claim 1, **characterized in that** the PA PACMX is selected from PA PACM10, PA PACM12 and PA PACM14.

3. Moulding material according to Claim 1, **characterized in that** the PA PACMX is a PA PACM12.

4. Moulding material according to any of the preceding claims, **characterized in that** the PA PACMX has been produced from PACM having a content of trans,trans isomer of 30% to 70% and preferably 35% to 65%.

5. Moulding material according to any of the preceding claims, **characterized in that** the PA PACMX is microcrystalline with an enthalpy of fusion, measured in accordance with ISO 11357 at the 2nd heating at a heating and cooling rate of 20°C/min, of 5 to 40 J/g and preferably of 8 to 35 J/g.

6. Moulding material according to any of the preceding claims, **characterized in that** the PA PACMX is transparent with a transmission of at least 85% and a haze of less than 3% where both properties are determined to ASTM D 1003 on injection moulded test specimens of 2 mm in thickness.

7. Moulding material according to Claim 3, **characterized in that** the PA PACM12
- has been produced from a PACM having a content of trans,trans isomer of 30% to 70% and preferably 35% to 65% and
- is microcrystalline with an enthalpy of fusion, measured in accordance with ISO 11357 at the 2nd heating at a heating and cooling rate of 20°C/min, of 5 to 40 J/g and preferably of 8 to 35 J/g.

8. Moulding material according to any of the preceding claims, **characterized in that** said material is transparent with a transmission of at least 85% measured according to ASTM D1003 on injection moulded test specimens of 2 mm in thickness.

9. Moulding material according to any of the preceding claims, **characterized in that** said material consists of components a) and b) and not more than 50 wt% of further customary added substances.

10. Moulded article produced from the moulding material according to any of the preceding claims.

11. Moulded article according to Claim 10, **characterized in that** said article is a moulding, a film, a bristle or a fibre.

12. Moulded article according to either of Claims 10 and 11, **characterized in that** said article is an eyeglasses frame, another frame or the surface coating of a sports article.

## Revendications

1. Mélange à mouler qui, à raison d'au moins 50 % en poids, est constitué de la combinaison des constituants suivants :
a) 80 à 97 parties en masse d'un composant polyamide, contenant
a1) 70 à 100 parties en poids de PA PACMX (avec X = 8 à 18) ainsi que
a2) 30 à 0 parties en poids d'un polyamide aliphatique linéaire ayant en moyenne 8 à 12 atomes de carbone dans les motifs monomères,
la somme des parties en poids faisant 100, ainsi que
b) 20 à 3 parties en masse d'un modifiant de type cœur-écorce, qui est constitué de particules ayant un diamètre moyen en poids de 20 à 500 nm, qui contient ce qui suit :
b1) un cœur, qui contient 60 à 100 % en poids de motifs butadiène et 0 à 40 % en poids de motifs styrène, le cœur représentant 60 à 95 % en poids du modifiant de type cœur-écorce ; ainsi que
b2) une écorce, qui contient 80 à 100 % en poids de motifs méthacrylate de méthyle et 0 à 20 % en poids de motifs monomères modifiants, l'écorce représentant 5 à 40 % en poids du modifiant de type cœur-écorce,
la somme des parties en masse étant de 100,
**caractérisé en ce que** la différence d'indice de réfraction entre le composant polyamide selon a) et le modifiant de type cœur-écorce selon b) à 20 °C est inférieure à 0,008, mesurée selon DIN EN ISO 489:1999 par la méthode A.

2. Mélange à mouler selon la revendication 1, **caractérisé en ce que** le PA PACMX est choisi parmi le PA PACM10, le PA PACM12 et le PA PACM14.

3. Mélange à mouler selon la revendication 1, **caractérisé en ce que** le PA PACMX est un PA PACM12.

4. Mélange à mouler selon l'une des revendications précédentes, **caractérisé en ce que** le PA PACMX a été fabriqué à partir de PACM dont la teneur en l'isomère trans,trans est de 30 à 70 % et de préférence de 35 à 65 %.

5. Mélange à mouler selon l'une des revendications précédentes, **caractérisé en ce que** le PA PACMX est microcristallin, avec une enthalpie de fusion, mesurée selon ISO 11357 à la deuxième montée en température et avec une vitesse de montée en température et de refroidissement de 20 °C/min, de 5 à 40 J/g et de préférence de 8 à 35 J/g.

6. Mélange à mouler selon l'une des revendications précédentes, **caractérisé en ce que** le PA PACMX est transparent, avec un facteur de transmission d'au moins 85 % et un voile inférieur à 3 %, les deux étant déterminés sur des éprouvettes moulées par injection ayant une épaisseur de 2 mm selon ASTM D 1003.

7. Mélange à mouler selon la revendication 3, **caractérisé en ce que** le PA PACM12
- a été fabriqué à partir d'un PACM dont la teneur en l'isomère trans,trans est de 30 à 70 % et de préférence de 35 à 65 % et
- est microcristallin avec une enthalpie de fusion, mesurée selon ISO 11357 à la deuxième montée en température et avec une vitesse de montée en température et de refroidissement de 20 °C/min, de 5 à 40 J/g et de préférence de 8 à 35 J/g.

8. Mélange à mouler selon l'une des revendications précédentes, **caractérisé en ce qu'**il est transparent et présente un facteur de transmission d'au moins 85 %, mesuré sur des éprouvettes moulées par injection ayant une épaisseur de 2 mm selon ASTM D1003.

9. Mélange à mouler selon l'une des revendications précédentes, **caractérisé en ce qu'**il est constitué des composants a) et b), ainsi qu'au maximum de 50 % en poids d'autres additifs usuels.

10. Objet moulé, fabriqué à partir du mélange à mouler selon l'une des revendications précédentes.

11. Objet moulé selon la revendication 10, **caractérisé en ce qu'**il s'agit d'une pièce moulée, d'une feuille, d'une soie ou d'une fibre.

12. Objet moulé selon l'une des revendications 10 et 11, **caractérisé en ce qu'**il est une monture de lunettes, un cadre ou un revêtement superficiel d'un article de sport.
